(19) Europäisches Patentamt
European Patent Office
Office européen des brevets

(11) Veröffentlichungsnummer: **0 232 539**
**B1**

(12) # EUROPÄISCHE PATENTSCHRIFT

(45) Veröffentlichungstag der Patentschrift: **04.10.89**

(21) Anmeldenummer: **86117976.0**

(22) Anmeldetag: **23.12.86**

(51) Int. Cl.⁴: **C 09 D 3/58**, C 09 D 3/72, C 09 D 3/49, C 08 G 18/08, B 05 D 7/26, C 08 G 59/40, C 09 J 3/16, C 03 C 25/02, D 06 M 15/37

(54) **Verfahren zur Herstellung von Flächengebilden.**

(30) Priorität: **11.01.86 DE 3600595**

(43) Veröffentlichungstag der Anmeldung: **19.08.87 Patentblatt 87/34**

(45) Bekanntmachung des Hinweises auf die Patenterteilung: **04.10.89 Patentblatt 89/40**

(84) Benannte Vertragsstaaten: **AT BE CH DE FR GB IT LI NL SE**

(56) Entgegenhaltungen: **Keine**

(73) Patentinhaber: **BAYER AG, D-5090 Leverkusen 1 Bayerwerk (DE)**

(72) Erfinder: **Schäfer, Walter, Dr., In den Weiden 25, D-5653 Leichlingen (DE)**
Erfinder: **Müller, Hanns Peter, Dr., Im Kerberich 6, D-5068 Odenthal (DE)**
Erfinder: **Küchenmeister, Rolf, Dr., Dreikönigenstrasse 119, D-4150 Krefeld 1 (DE)**
Erfinder: **Sickert, Armin, Schreberstrasse 9, D-4150 Krefeld 1 (DE)**

EP 0 232 539 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft ein neues Verfahren zur Herstellung von wasser- und lösungsmittelbeständigen Flachengebilden durch Beschichtung beliebiger Substrate mit einem wäßrigen Beschichtungsmittel, welches als Bindemittel sowohl bestimmte, anionisch modifizierte Polyisocyanat-Additionsprodukte als auch Epoxidgruppen enthaltende Verbindungen enthält.

Wäßrige Lösungen oder Dispersionen von anionisch modifizierten Polyisocyanat-Additionsprodukten, insbesondere wäßrige Dispersionen von anionisch modifizierten Polyurethanen bzw. Polyurethan-Polyharnstoffen und ihre Verwendung zur Herstellung von Überzügen sind bereits bekannt (vgl. z. B. DE-C-1 184 946, DE-C-1 178 586, DE-B-1 237 306, DE-A-1 495 745, DE-A-1 595 602, DE-A-1 770 068, DE-A-2 019 324, DE-A-2 314 512, oder auch D. Dieterich et al., Angew. Chem. 82, 53 (1970)).

Die Dispergierbarkeit der in diesen Dispersionen vorliegenden Polyisocyanat-Polyadditionsprodukte beruht auf der Anwesenheit von eingebauten ionischen Zentren, insbesondere von eingebauten Sulfonat- oder Carboxylatgruppen. Bei der Herstellung von Flächengebilden aus diesen Dispersionen verbleiben im allgemeinen die ionischen Zentren in den resultierenden Flächengebilden, was eine Verminderung der Wasserresistenz der resultierenden Beschichtung zur Folge hat.

Es war daher die der Erfindung zugrundeliegende Aufgabe, ein neues Verfahren zur Herstellung von Flächengebilden unter Verwendung von wäßrigen Lösungen oder Dispersionen von anionisch modifizierten Polyisocyanat-Additionsprodukten zur Verfügung zu stellen, welches nicht mit diesem gravierenden Nachteil behaftet ist.

Diese Aufgabe konnte durch das nachstehend näher beschriebene erfindungsgemäße Verfahren gelöst werden.

Gegenstand der Erfindung ist ein Verfahren zur Herstellung von wasser- und lösungsmittelresistenten Flächengebilden durch Beschichtung von Substraten mit einem wäßrigen Beschichtungsmittel, welches

a1) als Bindemittelkomponente, anionische Strukturenheiten der Formel

$$-NH-CO-\overset{\ominus}{N}-C\equiv N$$

in einer Menge von 5 bis 1200 Milliäquivalenten pro 100 g enthaltende Umsetzungsprodukte von organischen Polyisocyanaten mit Salzen des Cyanamids und Basen ausgewählt aus der Gruppe bestehend aus Ammoniak und flüchtigen primären und sekundären Aminen mit einem pKb-Wert von minimal 3,1 und beliebigen, flüchtigen aliphatischen tert. Aminen

und gegebenenfalls

b) die aus der Beschichtungstechnologie bekannten Hilfsund Zusatzmittel

enthält, anschließendem Verdunstenlassen oder Verdampfen des wäßrigen Lösungs- oder Dispergiermittels bei 5 bis 200°C unter gleichzeitiger Vernetzung des Bindemittels des auf das Substrat aufgetragenen Beschichtungsmittels, dadurch gekennzeichnet, daß man solche Beschichtungsmittel der genannten Art verwendet, die

a2) als weitere Bindemittelkomponente Polyepoxide mit mindestens zwei Epoxidgruppen pro Molekül und einem Epoxidäquivalentgewicht von mindestens 80 in einer solchen Menge enthält, die einem Äquivalentverhältnis von Epoxidgruppen zu anionischen Struktureinheiten der genannten Formel von 0,1 : 1 bis 3 : 1 entspricht.

Die DE-C-912 090 beschreibt zwar bereits die Umsetzung von organischen Polyisocyanaten u.a. mit Salzen des Cyanamids und tert.-Aminen, gegebenenfalls in wäßrigem Milieu.

Aus der US-A-4 379 728 ist zu entnehmen, daß die Umsetzungsprodukte von Isocyanaten, bevorzugt aromatischen Isocyanaten mit Cyanamid in Gegenwart von Epoxiden vernetzen.

Jedoch werden in diesen Veröffentlichungen weder die Verwendung von flüchtigen Basen - vorzugsweise werden Alkalioder Erdalkalisalz des Cyanamids eingesetzt - noch die Verwendung der erwähnten Lösungen zur Herstellung von Flächengebilden im Sinne des erfindungsgemäßen Verfahrens erwähnt.

Gemäß einem eigenen älteren Vorschlag (DE-A-3 441 934) werden zur Herstellung von wasser- und lösungsmittelresistenten Flächengebilden wäßrige Beschichtungsmittel verwendet, die als Bindemittel Polyisocyanat-Additionsprodukte der beim erfindungsgemäßen Verfahren als Bindemittelkomponente a1) einzusetzenden Art aufweisen. Wie jetzt gefunden wurde führt die Kombination der in der älteren Anmeldung beschriebenen Bindemittel mit Polyepoxiden als zweite Bindemittelkomponente zu wäßrigen Beschichtungsmitteln, die bereits bei tieferen Temperaturen ausgehärtet werden können.

Bei den beim erfindungsgemäßen Verfahren einzusetzenden wäßrigen Beschichtungsmitteln handelt es sich um Lösungen oder Dispersionen der nachstehend näher beschriebenen Bindemittelkomponenten a1) und a2) in Wasser oder einem Gemisch aus Wasser mit organischen Lösungsmitteln mit einem Wassergehalt des Gemischs von mindestens 10 Gew.-%, die gegebenenfalls b) die üblichen, aus der Beschichtungstechnologie bekannten, Hilfs- und Zusatzmittel enthalten.

Bei dem Lösungs- oder Dispergiermittel handelt es sich, wie gesagt, um reines Wasser oder um ein Gemisch aus Wasser und Lösungsmittel. Geeignete Lösungsmittel sind insbesondere mit Wasser mischbare Lösungsmittel wie z. B. Aceton, Methanol, Ethanol, Methylethylketon, N-Methylpyrrolidon, Tetrahydrofuran oder auch an sich mit Wasser nicht verträgliche Lösungsmittel wie z. B. Ethylacetat, n-Butanol oder Toluol. Im Falle der Mitverwendung derartiger, mit Wasser an sich nicht mischbarer Lösungsmittel, muß deren Menge jedoch so begrenzt werden, daß homogene Lösungen oder Dispersionen der Polyisocyanat-Additionsprodukte vorliegen. Größere Mengen derartiger Lösungsmittel werden daher, falls sie vorher zur Herstellung der Additionsprodukte eingesetzt worden sind, durch Dekantieren (vom unlöslichen Additionsprodukt) oder destillativ (aus der Lösung oder der Dispersion) entfernt.

Bei der Bindemittelkomponente a1) handelt es sich um Umsetzungsprodukte von organischen Polyisocyanaten mit bestimmten Salzen des Cyanamids.

Zur Herstellung dieser Polyisocyanat-Additionsprodukte geeignete Polyisocyanate sind beispielsweise:

(i) einfache organische Polyisocyanate des Molekulargewichtsbereichs 168 bis 300 wie z. B. 1,6-Diisocyanatohexan, 1-Isocyanato-3,3,5-trimethyl-5-isocyanatomethyl-cyclohexan, 2,4- und/oder 2,6-Diisocyanatotoluol, 4,4'- und/oder 2,4'-Diisocyanatodiphenylmethan oder 4,4'-Diisocyanato-dicyclohexylmethan.

Diese einfachen Diisocyanate werden allerdings weniger bevorzugt verwendet.

(ii) Modifizierte "Lackpolyisocyanate" mit einem (mittleren) Molekulargewicht von bis 1000, d.h. die an sich bekannten Biuret-, Isocyanurat-, Uretdion- oder Oxadiazintriongruppen aufweisenden, modifizierten Polyisocyanate auf Basis der unter (i) genannten einfachen Diisocyanate, wie beispielsweise das Tris-(6-isocyanatohexyl)-biuret oder dessen Gemische mit seinen höheren Homologen oder das Tris-(6-isocyanatohexyl)-isocyanurat oder seine Gemische mit seinen höheren Homologen und gegebenenfalls mit dem Bis-(6-isocyanatohexyl)-uretdion oder Bis-(6-isocyanatohexyl)-oxadiazintrion.

(iii) Höhermolekulare NCO-Prepolymere auf Basis der unter (i) und (ii) genannten Polyisocyanate und beliebigen, aus der Polyurethanchemie an sich bekannten Polyhydroxylverbindungen des Molekulargewichtsbereichs 62 bis 4000, vorzugsweise 62 bis 2500. Hierbei handelt es sich um Umsetzungsprodukte der unter (i) und (ii) beispielhaft genannten Polyisocyanate mit unterschüssigen Mengen an einfachen, mehrwertigen Alkoholen wie z. B. Ethylenglykol, Propylenglykol, Trimethylolpropan und/oder Glycerin oder mit Ethergruppen aufweisenden, mehrwertigen Alkoholen wie z. B. Diethylenglykol, Dipropylenglykol, Tripropylenglykol, Tetrapropylenglykol, den höhermolekularen Polyetherpolyolen, wie sie durch Alkoxylierung von geeigneten Startermolekülen wie z. B. den genannten einfachen mehrwertigen Alkoholen unter Verwendung von Ethylenoxid und/oder Propylenoxid erhalten werden können oder um Polyesterpolyole, wie sie beispielsweise durch Umsetzung von mehrbasischen Säuren bzw. deren Anhydriden wie z. B. Adipinsäure, Phthalsäure, Tetrahydrophthalsäure, Hexahydrophthalsäure, Maleinsäure, gegebenenfalls in Abmischung mit untergeordneten Mengen an einbasischen Säuren wie z. B. Benzoesäure oder Fettsäuren mit überschüssigen Mengen an mehrwertigen Alkoholen, insbesondere den oben beispielhaft genannten Ethergruppen-freien einfachen Alkoholen in an sich bekannter Weise zugänglich sind. Bei der Herstellung dieser NCO-Prepolymeren werden die beispielhaft genannten Polyisocyanate bzw. beliebige Gemische dieser Polyisocyanate mit unterschüssigen Mengen der beispielhaft genannten Polyhydroxylverbindungen oder beliebiger Gemische der beispielhaft genannten Polyhydroxylverbindungen, beispielsweise unter Einhaltung eines NCO/OH-Äquivalentverhältnisses von 1,2 : 1 bis 8 : 1, vorzugsweise 1,5 : 1 bis 3 : 1 zur Reaktion gebracht. Bei den "Prepolymeren" handelt es sich, wie aus diesem NCO/OH-Äquivalentverhältnis ersichtlich, oftmals um sogenannte "Semiprepolymere", d.h. um Gemische von überschüssigem, nicht umgesetztem Ausgangspolyisocyanat mit echten, Urethangruppen aufweisenden NCO-Prepolymeren. Auch derartige "Semiprepolymere" können bei der Herstellung der erfindungsgemäß zu verwendenden Polyisocyanat-Addukte eingesetzt werden.

Grundsätzlich ist es auch möglich, bei der Herstellung der Polyisocyanat-Additionsprodukte ionisch modifizierte Aufbaukomponenten der aus der Chemie der Polyurethandispersionen an sich bekannten Art mitzuverwenden, um zu Polyisocyanat-Additionsprodukten zu gelangen, die außer den erfindungswesentlichen anionischen Struktureinheiten der obengenannten allgemeinen Formel noch eingebaute Carboxylat- oder Sulfonatgruppen aufweisen. Dies wäre beispielsweise dadurch möglich, daß man NCO-Prepolymere einsetzt, die unter Verwendung bzw. Mitverwendung von Carboxylat- oder Sulfonatgruppen aufweisenden mehrwertigen Alkoholen oder unter Verwendung der entsprechenden Hydroxycarbonsäuren bzw. Hydroxysulfonsäuren unter anschließender Neutralisation der Säuregruppen hergestellt worden sind. Die Mitverwendung derartiger anionischer Aufbaukomponenten ist jedoch weniger bevorzugt, da einerseits die Hydrophilie der erfindungswesentlichen anionischen Struktureinheiten für die Löslichkeit bzw. Dispergierbarkeit der Polyisocyanat-Additionsprodukte im allgemeinen ausreicht, und da andererseits bei Mitverwendung derartiger anionischer Aufbaukomponenten die eingebauten anionischen Gruppen in den letztendlich erhaltenen Flächengebilden weiterhin vorliegen würden, was dem Zweck der Erfindung zuwiderlaufen würde.

Im allgemeinen weist die Polyisocyanatkomponente, die zur Herstellung der Polyisocyanat-Additionsprodukte eingesetzt wird, einen NCO-Gehalt von 0,2 bis 50, vorzugsweise 4 bis 25 Gew.-% auf.

Die Frage, ob bei der Herstellung der Polyisocyanat-Additionsprodukte einfache Polyisocyanate oder Lackpolyisocyanate oder NCO-Prepolymere eingesetzt werden, richtet sich in erster Linie nach den angestrebten Eigenschaften der gewünschten Flächengebilde. Durch den Einbau von elastifizierend wirkenden, höhermolekularen Polyhydroxylverbindungen in die Polyisocyanatkomponente kann beispielsweise die Elastizität der erhaltenen Beschichtung erhöht werden.

Zur Herstellung der Polyisocyanat-Additionsprodukte werden diese mit Ammoniumsalzen von Cyanamid zur Reaktion gebracht. Diese Ammoniumsalze können als solche eingesetzt werden oder auch in situ durch gleichzeitige Verwendung von Cyanamid und geeigneten Basen hergestellt werden. Geeignete Ammoniumsalze des Cyanamids sind solche auf Basis von (i) Ammoniak oder (ii) flüchtigen primären oder sekundären Aminen mit einem pKb-Wert von minimal 3,1 wie z. B. Methylamin, Dimethylamin, Ethylamin, tert.-Butylamin oder (iii) beliebigen flüchtigen aliphatischen tert. Aminen wie z. B. Trimethylamin, Triethylamin, Tripropylamin, Dimethylaminoethanol, N-Methyl-diethanolamin oder Triethanolamin. Der Begriff "flüchtig" bedeutet hierbei, daß die Amine bei der gegebenenfalls bei erhöhten Temperaturen erfolgenden Trocknung und Vernetzung der Beschichtungen verdunsten oder verdampfen. Die Zersetzung (Spaltung der salzartigen Cyanharnstoff-Ammonium-Gruppe) unter Freisetzung des Amins bei der Trocknung der Flächengebilde ist eine Voraussetzung für deren einwandfreie chemische Aushärtung.

Die Herstellung der Polyisocyanat-Additionsprodukte aus den genannten Ausgangsmaterialien erfolgt im allgemeinen im Temperaturbereich von 0 bis 80, vorzugsweise 5 bis 50°C in organischem oder wäßrigem Milieu, vorzugsweise unter Herstellung der Ammoniumsalze in situ in dem jeweiligen Reaktionsgemisch. Die Menge des Cyanamids wird hierbei so bemessen, daß ein Molverhältnis von freien Isocyanatgruppen zu Cyanamid von 0,5 : 1 bis 1,5 : 1, vorzugsweise 0,8 : 1 bis 1,2 : 1 vorliegt. Die Menge der Base wird so bemessen, daß für jedes Mol an, mit Isocyanatgruppen umzusetzendem Cyanamid mindestens 0,5 Mol, bevorzugt 1 Mol basischer Stickstoffatome zur Verfügung steht. Die Verwendung eines Aminüberschusses ist zwar möglich, jedoch wenig sinnvoll. Die Umsetzung zwischen den Isocyanatgruppen der Polyisocyanatkomponente und den Ammoniumsalzen verläuft nach folgender Gleichung:

$$R(NCO)_n + n\,H_2N\text{-}C{\equiv}N + nNR'_3 \rightarrow R(NH\text{-}CO\text{-}\overset{\ominus}{N}\text{-}C{\equiv}N)_n + n\overset{\oplus}{H}NR'_3$$

In dieser Gleichung stehen R für den indifferenten Rest des n-funktionellen Polyisocyanats und R' für Wasserstoff oder den indifferenten organischen Rest der Base.

Die Bindemittelkomponente a1) weist im allgemeinen einen die Löslichkeit bzw. Dispergierbarkeit beider Bindemittelkomponenten a1) und a2) in der kontinuierlichen wäßrigen Phase gewährleistenden Gehalt an den genannten anionischen Gruppen von 5 - 1200, vorzugsweise 2,5 bis 500 Milliäquivalenten pro 100 g auf.

Bei der erfindungswesentlichen Bindemittelkomponente a2) handelt es sich um Polyepoxide der aus der Epoxidharzchemie an sich bekannten Art, d.h. um Epoxidharze auf Basis von Phenolen, insbesondere von Bisphenol A und Phenolnovolaken, sowie Epoxidharze auf Basis aliphatischer Alkohole oder Glycidylgruppen tragende Copolymerisate.

Auch mindestens zwei Epoxidgruppen aufweisende Umsetzungsprodukte von Epichlorhydrin mit aromatischen Aminen wie Anilin, 2,4- und 2,6-Diaminotoluol oder 4,4'-Diaminodiphenylmethan sind geeignet. Die Polyepoxide weisen ein Epoxidäquivalentgewicht von mindestens 80, vorzugsweise von 100 bis 300 und mindestens zwei, vorzugsweise 2 bis 4 und insbesondere zwei Epoxidgruppen pro Molekül auf. Die diesen Angaben entsprechenden Umsetzungsprodukte von Bisphenol A (= 2,2-Bis-(4-hydroxyphenyl)-propan) mit Epichlorhydrin sind besonders bevorzugt. Verbindungen dieser Art sind in ausführlicher Weise im "Handbook of Epoxy Resins" von H. Lee und K. Neville, McGraw-Hill Book Com., New York, 1967 beschrieben.

Die Polyepoxide werden den erfindungsgemäßen Beschichtungsmitteln in solche Mengen zugesetzt, daß pro anionischer Struktureinheit

$$\text{-NH-}\underset{\underset{O}{\|}}{C}\text{-}\overset{\ominus}{N}\text{-}C{\equiv}O$$

0,1 bis 3, vorzugsweise 0,2 bis 2 Epoxidgruppen vorliegen. Im allgemeinen ist es nicht erforderlich, die Polyepoxide hydrophil zu modifizieren, um ihre Löslichkeit bzw. Dispergierbarkeit in dem wäßrigen Milieu zu gewährleisten, da auch bei Verwendung von vorwiegend wäßrigen Lösungs- oder Dispergiermitteln die anionisch modifizierten Polyisocyanat-Additionsprodukte in ausreichendem Maße als Dispergator bzw. Löslichkeitsvermittler für die Polyepoxide dienen.

Die Herstellung der wäßrigen Lösungen oder Dispersionen der Bindemittel a1) und a2) kann nach verschiedenen Varianten erfolgen:

1. Umsetzung eines organischen Polyisocyanats der beispielhaft genannten Art in flüssiger oder gelöster Form unter Verwendung eines organischen Lösungsmittels der oben beispielhaft genannten Art mit einem Gemisch aus Cyanamid und der zum Einsatz gelangenden Base unter anschließendem Auflösen bzw. Dispergieren des gegebenenfalls vom Lösungsmittel befreiten Umsetzungsproduktes in Wasser, gegebenenfalls unter anschließender destillativer Entfernung des Lösungsmittels aus der Lösung bzw. Dispersion. Zugabe des Polyepoxids zwecks Homogenisierung möglicherweise unter Aufheizen auf ca. 40 - 80°C.

2. Vermischen eines organischen Polyisocyanats der unter (i) oder (ii) beispielhaft genannten Art mit einer unterschüssigen Menge einer Polyhydroxylverbindung der unter (iii) beispielhaft genannten Art, Cyanamid und Base, gegebenenfalls in Gegenwart eines inerten Lösungsmittels und Herstellung sowohl des NCO-Prepolymeren als auch des Ammoniumsalzes aus Cyanamid und Base, in situ, sowie deren weitere Umsetzung in einem Eintopf-Verfahren unter weiterer Aufarbeitung des Reaktionsansatzes sowie unter 1. beschrieben. Zugabe des Polyepoxids zwecks Homogenisierung möglicherweise unter Aufheizen auf ca. 40 bis 80°C.

3. Zugabe eines gegebenenfalls in einem inerten Lösungsmittel der beispielhaft genannten Art gelösten Polyisocyanats zu einer wäßrigen Lösung des Ammoniumsalzes des Cyanamids, gegebenenfalls unter anschließender destillativer Entfernung des Hilfslösungsmittels. Zugabe des Polyepoxids zwecks Homogenisierung möglicherweise unter Aufheizen auf ca. 40 bis 80°C.

4. Zugabe eines gegebenenfalls in einem inerten Lösungsmittel der beispielhaft genannten Art gelösten Polyisocyanats zu einer wäßrigen Mischung des Ammoniumsalzes des Cyanamids mit Polyepoxid, gegebenenfalls unter anschließender destillativer Entfernung des Hilfslösungsmittels. Bei dieser Ausführungsform der Herstellung der beim erfindungsgemäßen Verfahren einzusetzenden Lösungen oder Dispersionen der Bindemittelkomponenten a1) und a2) kann bei Verwendung eines Polyisocyanatüberschusses, bezogen auf das vorliegende Ammoniumsalz des Cyanamids, nicht ausgeschlossen werden, daß ein Teil der Isocyanatgruppen mit gegebenenfalls in dem Polyepoxid vorliegenden Hydroxylgruppen unter Urethanbildung reagiert, was zur Folge hätte, daß die Bindemittelkomponenten a1) und a2) zumindest teilweise nicht als Gemisch sondern in über Urethangruppen miteinander verknüpfter Form vorliegen. Die erfindungswesentliche gleichzeitige Verwendung der Bindemittelkomponenten a1) und a2) umfaßt demzufolge auch solche Bindemittelkombinationen, in denen die Einzelkomponenten a1) und a2) zumindest teilweise in über Urethangruppen miteinander chemisch verbundener Form vorliegen.

Grundsätzlich ist es möglich, die Bindemittelkomponente a1) zu einem beliebigen Zeitpunkt nach ihrer Herstellung mit der Bindemittelkomponente a2) zu vereinigen.

Die oben bei der Auflistung der geeigneten Lösungsmittel ebenfalls erwähnten Alkohole können selbstverständlich nicht als Lösungsmittel für die Polyisocyanat-Komponente sondern lediglich als Lösungsmittel für das Cyanamid und die Base, d.h. das Ammoniumsalz des Cyanamids verwendet werden. Falls derartige Lösungen in alkoholischen Lösungsmitteln mit den Polyisocyanaten umgesetzt werden, stören die alkoholischen Hydroxylgruppen nicht, da die Salze des Cyanamids weit schneller mit den Isocyanaten abreagieren als die alkoholischen Hydroxylgruppen des Lösungsmittels.

In allen genannten Fällen entstehen letztendlich Lösungen oder Dispersionen der Polyisocyanat-Additionsprodukte und von Polyepoxiden in dem wäßrigen bzw. wäßrig-organischen Lösungs- bzw. Dispergiermittel. Die Frage, ob es sich hierbei um Lösungen oder Dispersionen handelt, hängt sowohl vom Molekulargewicht des eingesetzten Polyisocyanats als auch vom Gehalt der Bindemittelkomponente a1) an anionischen Gruppen als auch von der Art und Menge der eingesetzten Polyepoxidverbindung als auch von der Zusammensetzung des eingesetzten Lösungs- bzw. Dispergiermittels ab. Auch bei Verwendung von vorwiegend wäßrigen Lösungs- bzw. Dispergiermitteln und insbesondere bei Verwendung von Lösungs- bzw. Dispergiermitteln mit einem hohen Gehalt an mit Wasser mischbaren organischen Lösungsmitteln liegen oftmals echte Lösungen der Bindemittelkomponenten vor. Der Feststoffgehalt der Lösungen bzw. Dispersionen, bezogen auf die Bindemittelkomponenten a1) und a2), ohne Einbeziehung der gegebenenfalls mitverwendeten Hilfs- und Zusatzmittel b) liegt im allgemeinen bei 5 bis 95, vorzugsweise 20 bis 80 Gew.-%.

Die so erhaltenen wäßrigen Lösungen oder Dispersionen können als solche oder nach Abmischung mit weiteren Hilfsund Zusatzmitteln b) dem erfindungsgemäßen Verfahren zugefügt werden.

Gegebenenfalls mitzuverwendende Hilfs- und Zusatzmittel sind beispielsweise Farbstoffe, Pigmente, Verlaufshilfsmittel und ähnliche Hilfs- und Zusatzmittel der aus der Beschichtungstechnologie an sich bekannten Art.

Zur Durchführung des erfindungsgemäßen Verfahrens werden die gegebenenfalls Hilfs- und Zusatzmittel der genannten Art enthaltenden wäßrigen Lösungen oder Dispersionen nach beliebigen Methoden der Beschichtungstechnologie auf die zu beschichtenten Substrate aufgetragen. Die Überführung des bei dieser Beschichtung erhaltenen Naßfilms in einen vernetzten Lackfilm erfolgt innerhalb des Temperaturbereichs von 5 bis 200°C, vorzugsweise 25 bis 180°C unter Verdunstenlassen oder Verdampfen des Lösungs- oder Dispergiermittels, wobei insbesondere zur Beschleunigung der gewünschten Aushärtung der Beschichtung eine Hitzebehandlung innerhalb der genannten Temperaturbereiche angezeigt ist. Jedoch erfolgt nicht nur unter den Bedingungen einer derartigen Hitzebehandlung sondern beispielsweise auch bereits bei Lagerung der Beschichtung bei Raumtemperatur nicht nur eine Verdunstung des Lösungs- bzw. Dispergiermittels sondern gleichzeitig eine chemische Vernetzung des Bindemittels. Hierbei erfolgt sowohl intermediär eine Freisetzung von Polyisocyanat-Additionsprodukten mit endständigen Cyanharnstoffgruppierungen, die unter Dimerisierung unter Bildung von kettenverlängerten bzw. vernetzten, N-Cyanquanidin-Struktureinheiten aufweisenden Produkten vermutlich nach folgendem Reaktionsschema weiterreagieren:

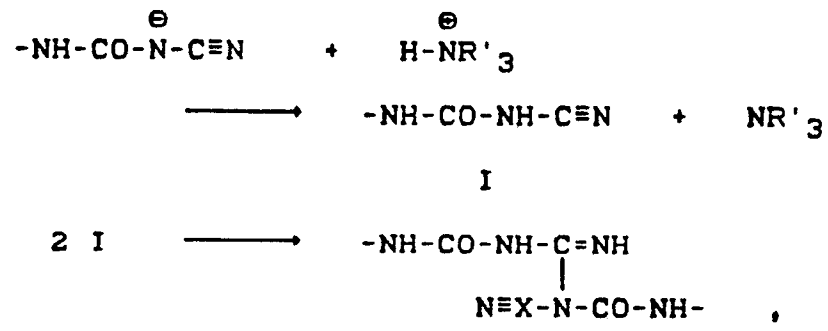

als auch eine Vernetzung der Cyanharnstoffe bzw. ihrer Dimerisierungsprodukte mit dem Polyepoxid.

Der Vernetzungsgrad der letztendlich erhaltenen Flächengebilde kann durch die Funktionalität der zur Herstellung der Bindemittelkomponente a1) eingesetzten Polyisocyanate, deren Molekulargewicht, die Funktionalität und Menge der eingesetzten Polyepoxide und/oder deren Molekulargewicht eingestellt werden.

Das erfindungsgemäße Verfahren gestattet die Herstellung von Flächengebilden der unterschiedlichsten Art. So umfaßt der Begriff "Flächengebilde" im Rahmen der Erfindung sowohl Lacküberzüge auf beliebigen Substraten wie z. B. Metallen, Holz, Papier, Textilien, Leder, mineralischen Substraten oder Glasfasern als auch Klebstoffschichten auf miteinander zu verklebenden Substraten. Das erfindungsgemäße Verfahren eignet sich demzufolge beispielsweise zur Herstellung von Lackschichten auf Flächengebilden der beispielhaft genannten Art, für die Lederzurichtung, für die Herstellung von Glasfaserschichten oder auch zur Herstellung von Verbundmaterialien durch Verkleben der unterschiedlichsten Substrate wie z. B. Kork- oder Holzmehl, Holzspänen, Glasfasern, Asbest, papierartigen Materialien, Plastik- oder Gummiabfällen oder keramischen Materialien mit sich selbst oder untereinander.

Die nachfolgenden Beispiele dienen der weiteren Erläuterung des erfindungsgemäßen Verfahrens. Alle Prozentangaben beziehen sich auf Gewichtsprozente.

**Beispiel 1**

Zu 164 g eines Polyesters des Molekulargewichts 1700 auf Basis von Adipinsäure und Hexandiol-1,6 und Neopentylglykol (Gewichtsverhältnis der Diole = 11 : 6) werden 350 g eines Biuretpolyisocyanats auf Basis von 1,6-Diisocyanatohexan mit einem NCO-Gehalt von 23,9 % gegeben, die Reaktionsmischung wird 3 Stunden auf 120° C aufgeheizt (NCO-Gehalt des Prepolymeren = 13,5 %).

250 g des Umsetzungsproduktes (0,8 Mol NCO) werden bei 0 bis 10° C zu einer Mischung aus 33,8 g (0,8 Mol) Cyanamid (mit 1 % $NaH_2PO_4$) und 81,2 g (0,8 Mol) Triethylamin in 50 ml Tetrahydrofuran gegeben, so daß die Temperatur 25° C nicht übersteigt.

Nachdem noch 15 Minuten nachgerührt worden ist, wird das Polyisocyanat-Additionsprodukt in 350 ml Wasser gelöst. Anschließend wird bei 60 bis 80° C Stickstoff durch die Lösung geleitet und so das Tetrahydrofuran aus der Lösung entfernt. Die dann zurückbleibende wäßrige Lösung weist einen Feststoffgehalt von 44 % und bei 20° C eine Viskosität von 1760 mPas auf.

Das gelöste Polyisocyanat-Additionsprodukt enthält 220 Milliäquivalente pro 100 g an anionischen Gruppen.

Nun werden 50 g eines Polyepoxids auf Basis von Bisphenol A und Epichlorhydrin (Epoxidäquivalentgewicht = 180) zugemischt und 10 Minuten bei 50° C durch Rühren homogenisiert.

Rakelt man die Lösung des Polyisocyanat-Epoxid-Additionsprodukts auf eine Glasplatte auf, so erhält man nach 3-tägiger Lagerung bei Raumtemperatur einen Film, der sowohl gegen Wasser als auch gegen Aceton beständig ist.

**Beispiel 2**

21 g (0,5 Mol) Cyanamid (mit 1 % $NaH_2PO_4$ stabilisiert), 50,5 g (0,5 Mol) Triethylamin und 180 g eines Polyepoxids auf Basis von Bisphenol A und Epichlorhydrin (Epoxidäquivalent = 180), gelöst in 50 ml Tetrahydrofuran, werden unter Kühlung auf 10° C zusammengegeben. Es werden 155 g (0,5 Mol NCO) des Prepolymeren aus Beispiel 1 gelöst in 100 ml Tetrahydrofuran bei 10 - 20° C zugetropft. Nachdem noch 15 Minuten nachgerührt worden ist, werden 230 ml Wasser zugesetzt.

Man erhält eine klare Lösung, die einen Feststoffgehalt von 48 % hat und bei 22° C eine Viskosität von 170 mPas aufweist.

Rakelt man die Lösung auf eine Glasplatte auf, so entsteht innerhalb von 3 Tagen bei Raumtemperatur ein glänzender Film, der sowohl gegen Wasser als auch gegen Aceton beständig ist.

**Patentanspruch**

Verfahren zur Herstellung von wasser- und lösungsmittelresistenten Flächengebilden durch Beschichtung von Substraten mit einem wäßrigen Beschichtungsmittel, welches

a1) als Bindemittelkomponente, anionische Struktureinheiten der Formel

$$-NH-CO-\overset{\ominus}{N}-C\equiv N$$

in einer Menge von 5 bis 1200 Milliäquivalenten pro 100 g enthaltende, Umsetzungsprodukte von organischen Polyisocyanaten mit Salzen des Cyanamids und Basen ausgewählt aus der Gruppe bestehend aus Ammoniak und flüchtigen primären und sekundären Aminen mit einem pKb-Wert von minimal 3,1 und beliebigen, flüchtigen aliphatischen tert. Aminen

und gegebenenfalls

b) die aus der Beschichtungstechnologie bekannten Hilfsund Zusatzmittel

enthält, anschließendem Verdunstenlassen oder Verdampfen des wäßrigen Lösungs- oder Dispergiermittels bei 5 bis 200°C unter gleichzeitiger Vernetzung des Bindemittels des auf das Substrat aufgetragenen Beschichtungsmittels, dadurch gekennzeichnet, daß man solche Beschichtungsmittel der genannten Art verwendet, die

a2) als weitere Bindemittelkomponente Polyepoxide mit mindestens zwei Epoxidgruppen pro Molekül und einem Epoxidäquivalentgewicht von mindestens 80 in einer solchen Menge enthält, die einem Äquivalentverhältnis von Epoxidgruppen zu anionischen Struktureinheiten der genannten Formel von 0,1 : 1 bis 3 : 1 entspricht.

**Claim**

A process for the production of water- and solvent-resistant sheet-form materials by coating substrates with an aqueous coating composition containing

a1) as binder component reaction products - containing anionic structural units corresponding to the formula

$$-NH-CO-\overset{\ominus}{N}-C\equiv N$$

in a quantity of from 5 to 1200 milliequivalents per 100 g - of organic polyisocyanates with salts of cyanamide and bases selected from the group consisting of ammonia and volatile primary and secondary amines with a pKb value of at least 3.1 and any volatile aliphatic tertiary amines

and, optionally,

b) the auxiliaries and additives known from coating technology,

evaporating the aqueous solvent or dispersant, or leaving it to evaporate, at 5 to 200°C with simultaneous cross-linking of the coating composition applied to the substrate, characterized in that the coating compositions used contain

a2) as further binder component polyepoxides containing at least two epoxide groups per molecule and having an epoxide equivalent weight of at least 80 in a quantity corresponding to an equivalent ratio of epoxide groups to anionic structural units of the above formula of from 0.1 : 1 to 3 : 1.

**Revendication**

Procédé pour la fabrication de pellicules résistant à l'eau et aux solvants par enduction de substrats au moyen d'un produit de revêtement à base aqueuse, contenant

a1) comme composants liants, des produits de réaction de polyisocyanates organiques avec des sels de cyanamide et des bases à choisir parmi le groupe comportant l'ammoniaque et des amines volatiles primaires et secondaires avec une valeur pKb minimale de 3,1 et des amines tertiaires volatiles quelconques contenant des unités structurelles anioniques de formule

$$-NH-CO-\overset{\ominus}{N}-C\equiv N$$

en quantités de 5 à 1200 milliéquivalents par 100 g
et éventuellement
b) des adjuvants et additifs connus de la technologie des revêtements,
suivie de vaporisation ou d'évaporation de l'agent de dissolution ou de dispersion aqueux à une température de 5 à 200°C avec réticulation simultanée du liant du produit de revêtement appliqué sur le substrat, caractérisé en ce que l'on utilise des produits de revêtement du genre cité, qui contiennent
a2) comme autre composants liants des composés polyépoxy avec au moins deux groupes époxy par molécule et un équivalent en poids d'époxy d'au moins 80 en quantités correspondant à un rapport équivalent de 0,1 : 1 à 3 : 1 entre les groupes époxy et les unités structurelles anioniques de formule citée.